# EUROPÄISCHE PATENTSCHRIFT

(11) **EP 2 494 179 B1**
(45) Veröffentlichungstag und Bekanntmachung des Hinweises auf die Patenterteilung: **05.03.2014**
(21) Anmeldenummer: 10775760.1
(22) Anmeldetag: 22.10.2010
(51) Int. Cl.: F02M 25/07, F28F 9/02

(54) **ABGASWÄRMETAUSCHER**
EXHAUST GAS HEAT EXCHANGER
ECHANGEUR DE CHALEUR POUR GAZ D'ÉCHAPPEMENT

(30) Priorität: 27.10.2009 DE 102009050884
(43) Veröffentlichungstag der Anmeldung: 05.09.2012
(73) Patentinhaber: Behr GmbH & Co. KG, 70469 Stuttgart (DE)
(72) Erfinder: SAUTER, Frank, 70771 Leinfelden-Echterdingen (DE); SCHLEICHER, Christian, 70771 Leinfelden-Echterdingen (DE); KNAUS, Hermann, 70192 Stuttgart (DE); CZEMMEL, Heinz, 71277 Rutesheim (DE); DARRIET, David, 70197 Stuttgart (DE)
(74) Vertreter: Grauel, Andreas
(86) Internationale Anmeldenummer: PCT/EP2010/065995
(87) Internationale Veröffentlichungsnummer: WO 2011/051190

(56) Entgegenhaltungen:
- EP-A1- 1 544 564
- WO-A1-2008/049648
- DE-A1-102006 040 851
- DE-A1-102007 031 419
- JP-A- 2002 168 586
- US-A1- 2002 162 651
- US-A1- 2005 126 768

## Beschreibung

Die Erfindung betrifft einen Abgaswärmetauscher, insbesondere für ein Kraftfahrzeug, umfassend: mindestens einen Diffusor zum Zuführen und/oder Abführen eines Abgasstroms; einen Tauscherbereich mit sich in axialer Richtung erstreckenden Tauscherrohren, die an einem Ende mit einem Boden verbunden sind; ein von einem Kühlmittel durchströmbares Gehäuse, das aus einem nicht hochtemperaturfesten Material, insbesondere Kunststoff oder Aluminium, gebildet ist. Die Erfindung betrifft des Weiteren ein Verfahren zum Herstellen eines derartigen Abgaswärmetauschers.

In der deutschen Offenlegungsschrift DE 10 2007 031 419 A1 ist ein Abgaskühler offenbart, bei dem das Gehäuse unter Zwischenschaltung von Dichtungselementen durch Schraubverbindungselemente mit einem Diffusor und/oder einem Boden verbunden ist. Um einen Wärmeeintrag in das Gehäuse zu verhindern, soll das Gehäuse nicht durch eine Verlötung oder Verschweißung mit dem Diffusor und/oder dem Boden verbunden werden. Aus der deutschen Offenlegungsschrift DE 10 2006 040 851 A1 ist ein Ladeluftkühler mit Strömungskanälen aus metallischen Hohlkörpern bekannt, die an ihren Längsendseiten jeweils zur Ausbildung eines gemeinsamen Rohrbodens mit Kunststoff umspritzt sind.

Weitere gattungsgemäße Wärmeübertrager sind in der EP 1 544 564 A1 und der WO 2008/049 648 A1 offenbart.

Aufgabe der Erfindung ist es, einen Abgaswärmetauscher gemäß dem Oberbegriff des Anspruchs 1 zu schaffen, der einfach aufgebaut und kostengünstig herstellbar ist.

Die Aufgabe ist bei einem Abgaswärmetauscher, insbesondere für ein Kraftfahrzeug, umfassend: mindestens einen Diffusor zum Zuführen und/oder Abführen eines Abgasstroms; einen Tauscherbereich mit sich in axialer Richtung erstreckenden Tauscherrohren, die an einem Ende mit einem Boden verbunden sind; ein von einem Kühlmittel durchströmbares Gehäuse, das aus einem nicht hochtemperaturfesten Material, insbesondere Kunststoff oder Aluminium, gebildet ist, dadurch gelöst, dass ein Verbindungselement teilweise in das Gehäuse eingebettet ist, um das Verbindungselement an dem Gehäuse zu befestigen, wobei das Verbindungselement in einem ersten Stoffschlussbereich stoffschlüssig mit dem Boden verbunden ist, der in einem zweiten Stoffschlussbereich stoffschlüssig mit dem Diffusor verbunden ist. Das liefert den Vorteil, dass die bekannten Schraubverbindungselemente entfallen können. Darüber hinaus kann die Dichtigkeit durch die stoffschlüssigen Verbindungen verbessert werden, so dass gegebenenfalls eines der oder beide herkömmlichen Dichtungselemente entfallen können. Der Abgaswärmetauscher ist vorzugsweise als Abgaskühler ausgeführt. In den Diffusor kann eine Bypassklappe integriert sein. Der Tauscherbereich wird vorzugsweise an beiden Enden von jeweils einem Boden begrenzt.

Ein bevorzugtes Ausführungsbeispiel des Abgaswärmetauschers ist dadurch gekennzeichnet, dass das Verbindungselement als Rahmen ausgeführt ist. Die Gestalt des Rahmens ist in dem ersten Stoffschlussbereich an die Gestalt des Bodens angepasst. In dem zweiten Stoffschlussbereich ist die Gestalt des Bodens an die Gestalt des Diffusors angepasst; beziehungsweise umgekehrt.

Ein weiteres bevorzugtes Ausführungsbeispiel des Abgaswärmetauschers ist dadurch gekennzeichnet, dass das Verbindungselement einen flanschartigen Verbindungsumfangsrandbereich aufweist, der in dem ersten Stoffschlussbereich mit einem flanschartigen Bodenumfangsrandbereich verschweißt ist, der an dem Boden ausgebildet ist. Bei den Umfangsrandbereichen handelt es sich vorzugsweise um äußere Umfangsrandbereiche. Die stoffschlüssige Verbindung wird vorzugsweise durch Laserschweißen erzeugt.

Ein weiteres bevorzugtes Ausführungsbeispiel des Abgaswärmetauschers ist dadurch gekennzeichnet, dass der Diffusor einen Diffusorrandbereich aufweist, der in dem zweiten Stoffschlussbereich mit dem Boden verschweißt ist. Die stoffschlüssige Verbindung wird vorzugsweise durch Laserschweißen erzeugt.

Ein weiteres bevorzugtes Ausführungsbeispiel des Abgaswärmetauschers ist dadurch gekennzeichnet, dass die beiden Stoffschlussbereiche in unterschiedlichen Ebenen des Bodens angeordnet sind. Die Anordnung in den unterschiedlichen Ebenen ist vorzugsweise so gestaltet, dass die beiden Stoffschlussbereiche gleichzeitig oder nacheinander gut zugänglich sind, um die Verschweißung durchzuführen.

Ein weiteres bevorzugtes Ausführungsbeispiel des Abgaswärmetauschers ist dadurch gekennzeichnet, dass das Gehäuse aus Kunststoff oder Aluminium und das Verbindungselement aus Edelstahl gebildet sind. Das Gehäuse ist vorzugsweise als Spritzgussteil aus Kunststoff gebildet.

Ein weiteres bevorzugtes Ausführungsbeispiel des Abgaswärmetauschers ist dadurch gekennzeichnet, dass das Verbindungselement teilweise mit dem Material umspritzt ist, aus dem das Gehäuse gebildet ist. Bei dem Material handelt es sich vorzugsweise um Kunststoffmaterial, aus welchem das Gehäuse im Spritzgussverfahren hergestellt wird, wobei gleichzeitig das Verbindungselement teilweise umspritzt wird.

Ein weiteres bevorzugtes Ausführungsbeispiel des Abgaswärmetauschers ist dadurch gekennzeichnet, dass der Diffusor aus Metall, insbesondere aus Metallblech oder aus Metallgussmaterial, gebildet ist. Der Diffusor kann in dem zweiten Formschlussbereich ebenfalls einen flanschartigen Umfangsrandbereich aufweisen.

Bei einem Verfähren zum Herstellen eines vorab beschriebenen Abgaswärmetauschers ist die vorab angegebene Aufgabe alternativ oder zusätzlich dadurch gelöst, dass das Verbindungselement beim Spritzgießen des Gehäuses teilweise mit dem Material umspritzt wird, aus dem das Gehäuse durch Spritzgießen gebildet wird. Vorzugsweise wird das Gehäuse mit dem teilweise darin eingebetteten Verbindungselement im Spritzgießverfahren hergestellt.

Ein bevorzugtes Ausführungsbeispiel des Verfahrens ist dadurch gekennzeichnet, dass der Boden in dem ersten Stoffschlussbereich mit dem Verbindungselement verschweißt wird, wonach der Boden in dem zweiten Stoffschlussbereich mit dem Diffusor verschweißt wird. Das Verschweißen erfolgt vorzugsweise nacheinander in den beiden Stoffschlussbereichen durch Laserschweißen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine Explosionsdarstellung eines erfindungsgemäßen Abgaswärmetauschers;
- Figur 2: ein Gehäuse des Abgaswärmetauschers aus Figur 1 nach dem Anschweißen eines Bodens an ein Verbindungselement;
- Figur 3: das Gehäuse aus Figur 2 nach dem Anschweißen eines Diffusors an den Boden und
- Figur 4: die Schweißverbindungen aus den Figuren 2 und 3 im Schnitt.

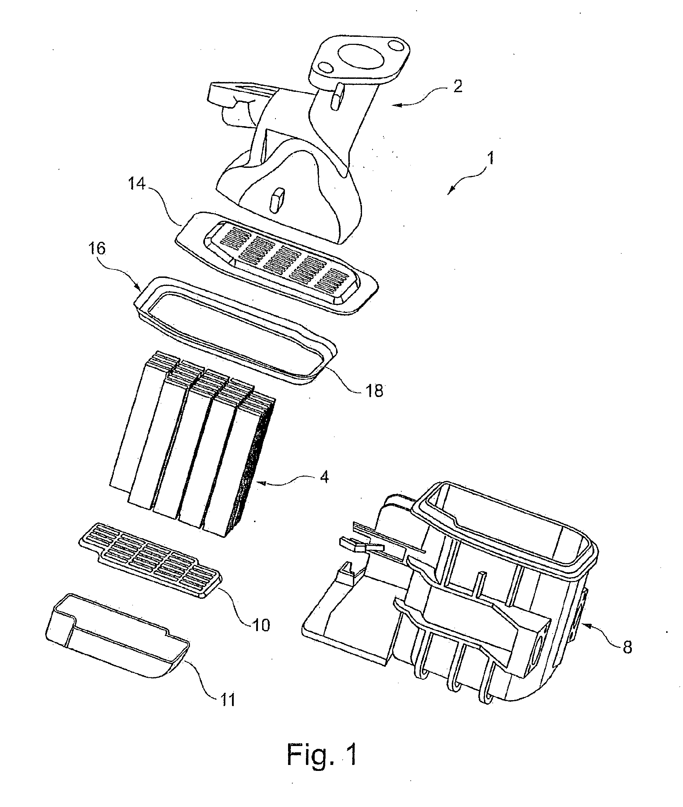

In den Figuren 1 bis 4 ist ein Abgaswärmetauscher 1 in verschiedenen Ansichten beziehungsweise Montage- oder Herstellungszuständen dargestellt. Der Abgaswärmetauscher 1 umfasst einen Diffusor 2 und einen Tauscherbereich 4. Der Tauscherbereich 4 umfasst vorzugsweise eine Vielzahl von in einer Richtung verlaufenden Tauscherrohren und ist in einem Gehäuse 8 aus Kunststoff oder Aluminium untergebracht. Die Enden der Tauscherrohre sind an einem Ende des Tauscherbereichs 4 mit einem Boden 10 verschweißt.

Die Durchströmung des Tauscherbereichs 4 wird durch eine Umlenkkappe 11 umgelenkt, die mit dem Boden 10 verschweißt sein kann. Die Umlenkkappe 11 mit dem Boden 10 ist im montierten Zustand so dem Gehäuse 8 angeordnet, dass die dem Boden 10 abgewandten Enden der Tauscherrohre des Tauscherbereichs 4 in einen Boden 14 münden, mit dem diese Enden der Tauscherrohre verschweißt sind. Die Tauscherrohre werden in dem Tauscherbereich 4 zwischen den Böden 10 und 14 in dem Gehäuse 8 von einem Kühlmittel umströmt, um einen durch die Tauscherrohre strömenden Abgasstrom zu kühlen.

Gemäß einem wesentlichen Aspekt der Erfindung ist ein Verbindungselement 16 in Gestalt eines Rahmens 18 aus Edelstahl durch Umspritzen teilweise in das Gehäuse 8 eingebettet. Das Gehäuse 8 ist vorzugsweise aus Kunststoff im Spritzgussverfahren hergestellt. Dabei wird der Rahmen 18, der das Verbindungselement 16 darstellt, in ein Spritzgusswerkzeug eingelegt und teilweise mit Kunststoff umspritzt.

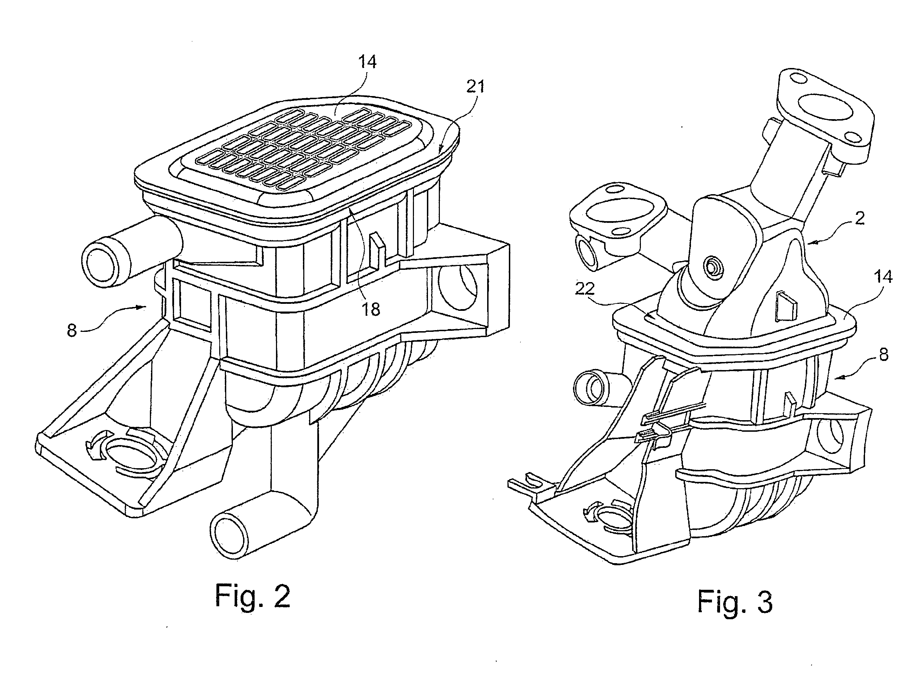

In Figur 2 ist dargestellt, dass der Boden 14 in einem ersten Stoffschlussbereich 21 durch Laserschweißen mit dem Rahmen beziehungsweise dem Verbindungselement 16 verschweißt wird. Dabei ist der erste Stoffschlussbereich 21 jeweils an einem äußeren Umfangsrand des Rahmens 18 und des Bodens 14 angeordnet, dass er für eine entsprechende Laserschweißvorrichtung gut zugänglich ist.

In Figur 3 ist dargestellt, dass der Diffusor 2 in einem zweiten Stoffschlussbereich 22, vorzugsweise ebenfalls durch Laserschweißen, mit dem Boden 14 verschweißt wird. Dabei ist der zweite Stoffschlussbereich 22 ebenfalls gut zugänglich für die Laserschweißvorrichtung.

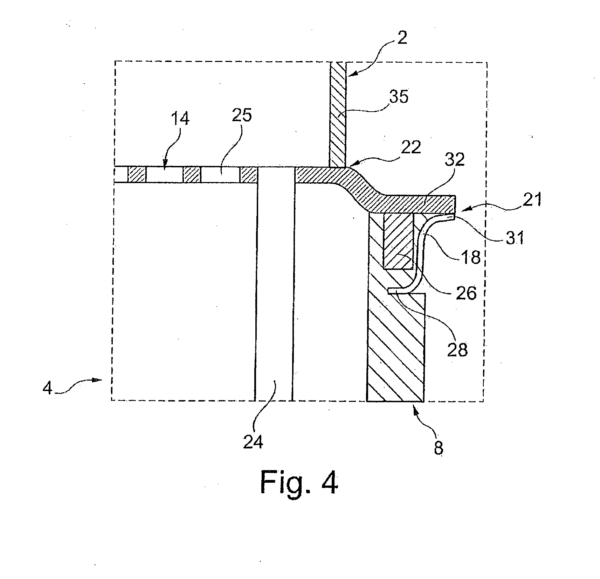

In Figur 4 sind die beiden Stoffschlussbereiche 21, 22 im Schnitt dargestellt. In der Schnittansicht sieht man, wie ein Tauscherrohr 24 des Tauscherbereichs 4 an einem Ende stoffschlüssig, vorzugsweise durch Schweißen, mit einem Bodengrundkörper 25 des Bodens 14 verbunden ist. Der Bodengrundkörper 25 hat im Wesentlichen die Gestalt einer ebenen Platte und ist mit Durchgangslöchern versehen, durch welche die Abgasströmung in die Tauscherrohre 24 des Tauscherbereichs 4 gelangt.

Zur Abdichtung zwischen dem Boden 14 und dem Gehäuse 8 ist eine Dichtung 26 in einer Ringnut mit einem rechteckigen Ringquerschnitt des Gehäuses 8 aufgenommen. Etwas beabstandet von der Dichtung 26 ist ein Steg 28 durch Umspritzen in das Gehäuse 8 eingebettet. Der Steg 28 gehört zu dem Rahmen 18 und ist einstückig mit einem flanschartigen Verbindungsumfangsrandbereich 31 verbunden.

An dem flanschartigen Verbindungsumfangsrandbereich 31 ist der Rahmen 18 in dem ersten Stoffschlussbereich 21 mit einem Bodenumfangsrandbereich 32 des Bodens 14 verschweißt. Der Bodenumfangsrandbereich 32 erstreckt sich in einer anderen Ebene etwa parallel zu dem Bodengrundkörper 25 des Bodens 14.

Am äußeren Umfang des Bodengrundkörpers 25 ist der Boden 14 in dem zweiten Stoffschlussbereich 22 mit einem Diffusorrandbereich 35 des Diffusors 2 verschweißt. Wie man in der Darstellung der Figur 4 sieht, sind sowohl der erste Stoffschlussbereich 21 als auch der zweite Stoffschlussbereich 22 gut mit einer Laserschweißvorrichtung erreichbar, um die zum Schweißen erforderliche Wärmeenergie in Form von Laserstrahlung in die beiden Stoffschlussbereiche 21, 22 einzubringen.

Bei der Herstellung des Gehäuses 8 mit dem darin eingebetteten Verbindungselement 16 beziehungsweise Rahmen 18 kann die Dichtung 26 auch direkt in das Gehäuse 8 eingespritzt werden. Die Dichtung 26 ist vorzugsweise aus einem elastomeren Kunststoffmaterial gebildet.

Zur Herstellung des Abgaswärmetauschers 1 werden zunächst die Tauscherrohre des Tauscherbereichs 4 zwischen den Böden 10 und 14 angeordnet. Dieses Anordnen der Tauscherrohre zwischen den Böden 10 und 14 wird auch als Kassetieren der Tauscherrohre bezeichnet. Daraufhin werden die Enden der Rohre mit den Böden 10, 14 verschweißt, vorzugsweise durch Laserschweißen. Nach einer anschließenden Dichtprüfung wird die Umlenkkappe 11 mit dem Boden 10 verschweißt.

Daraufhin kann der Tauscherbereich 4 zusammen mit den Böden 10 und 14 sowie der Umlenkkappe 11 in das Gehäuse 8 eingesetzt werden. Dann kann das Gehäuse 8 in einer Laserschweißvorrichtung positioniert werden. Anschließend wird der Diffusor 2 auf dem Boden 14 positioniert. Schließlich kann hintereinander oder gleichzeitig das Verschweißen des Bodens 14 mit dem Rahmen 18 beziehungsweise dem Verbindungselement 16 und des Diffusors 2 mit dem Boden 14 erfolgen. Nach einer abschließenden Dichtprüfung ist der Abgaswärmetauscher 1 fertig.

## Patentansprüche

1. Abgaswärmetauscher, insbesondre für ein Kraftfahrzeug, umfassend:
mindestens einen Diffusor (2) zum Zuführen und/oder Abführen eines Abgasstroms;
einen Tauscherbereich (4) mit sich in axialer Richtung erstreckenden Tauscherrohren, die an einem Ende mit einem Boden (14) verbunden sind;
ein von einem Kühlmittel durchströmbares Gehäuse (8), das aus einem nicht hochtemperaturfesten Material, insbesondere Kunststoff oder Aluminium, gebildet ist,
wobei der Tauscherbereich (4) in dem Gehäuse untergebracht ist, wobei
ein Verbindungselement (16) teilweise in das Gehäuse (8) eingebettet ist, um das Verbindungselement (16) an dem Gehäuse (8) zu befestigen, wobei das Verbindungselement (16) in einem ersten Stoffschlussbereich (21) stoffschlüssig mit dem Boden (14) verbunden ist, der in einem zweiten Stoffschlussbereich (22) stoffschlüssig mit dem Diffusor (2) verbunden ist, **dadurch gekennzeichnet, dass** das Verbindungselement (16) teilweise mit dem Material umspritzt ist, aus dem das Gehäuse (8) gebildet ist.

2. Abgaswärmetauscher nach Anspruch 1, **dadurch gekennzeichnet, dass** das Verbindungselement (16) als Rahmen (18) ausgeführt ist.

3. Abgaswärmetauscher nach einem der vorhergehenden Ansprüche, **dadurch gekennzeichnet, dass** das Verbindungselement (16) einen flanschartigen Verbindungsumfangsrandbereich (31) aufweist, der in dem ersten Stoffschlussbereich (21) mit einem flanschartigen Bodenumfangsrandbereich (32) verschweißt ist, der an dem Boden (14) ausgebildet ist.

4. Abgaswärmetauscher nach einem der vorhergehenden Ansprüche, **dadurch gekennzeichnet, dass** der Diffusor (2) einen Diffusorrandbereich (35) aufweist, der in dem zweiten Stoffschlussbereich (22) mit dem Boden (14) verschweißt ist.

5. Abgaswärmetauscher nach einem der vorhergehenden Ansprüche, **dadurch gekennzeichnet, dass** die beiden Stoffschlussbereiche (21,22) in unterschiedlichen Ebenen des Bodens (14) angeordnet sind.

6. Abgaswärmetauscher nach einem der vorhergehenden Ansprüche, **dadurch gekennzeichnet, dass** das Gehäuse (8) aus Kunststoff oder Aluminium und das Verbindungselement (16) aus Edelstahl gebildet sind.

7. Abgaswärmetausche nach einem der vorhergehenden Ansprüche, **dadurch gekennzeichnet, dass** der Diffusor (2) aus Metall, insbesondere aus Metallblech oder aus Metallgussmaterial, gebildet ist.

8. Verfahren zum Herstellen eines Abgaswärmetauschers (1) nach einem der vorhergehenden Ansprüche, **dadurch gekennzeichnet, dass** das Verbindungselement (16) beim Spritzgießen des Gehäuses (8) teilweise mit dem Material umspritzt wird, aus dem das Gehäuse (8) durch Spritzgießen gebildet wird.

9. Verfahren nach Anspruch 8, **dadurch gekennzeichnet, dass** der Boden (14) in dem ersten Stoffschlussbereich (21) mit dem Verbindungselement (16) verschweißt wird, wonach der Boden (14) in dem zweiten Stoffschlussbereich (22) mit dem Diffusor (2) verschweißt wird.

## Claims

1. An exhaust gas heat exchanger, in particular for a motor vehicle, comprising:
at least one diffuser (2) for feeding and/or discharging an exhaust gas flow;
an exchanger region (4) having exchanger tubes which extend in the axial direction and which are connected to a base (14) at one end;
a housing (8) through which a coolant flows and which is made of a material which is non-resistant to high temperatures, in particular plastic or aluminum,
the exchanger region (4) being accommodated in the housing,
a connecting element (16) being partially embedded into the housing (8) in order to attach the connecting element (16) to the housing (8), the connecting element (16) being bonded to the base (14) in a first bonding region (21), the base being bonded to the diffuser (2) in a second bonding region (22) **characterized in that** the connecting region (16) is partially coated with the material from which the housing (8) is made.

2. The exhaust gas heat exchanger according to claim 1, **characterized in that** the connecting element (16) is designed as a frame (18).

3. The exhaust gas heat exchanger according to one of the preceding claims, **characterized in that** the connecting element (16) has a flange-like circumferential joint edge area (31) which, in the first bonding region (21), is welded to a flange-like circumferential base edge area (32) which is provided on the base (14).

4. The exhaust gas heat exchanger according to one of the preceding claims, **characterized in that** the diffuser (2) has a diffuser edge region (35) which is welded to the base (14) in the second bonding region (22).

5. The exhaust gas heat exchanger according to one of the preceding claims, **characterized in that** the two bonding regions (21, 22) are disposed on different planes of the base (14).

6. The exhaust gas heat exchanger according to one of the preceding claims, **characterized in that** the housing (8) is made of plastic or aluminium and the connecting element (16) is made of high-grade steel.

7. The exhaust gas heat exchanger according to one of the preceding claims, **characterized in that** the diffuser (2) is made of metal, in particular a metal sheet or a metal casting material.

8. A method for manufacturing an exhaust gas heat exchanger (1) according to one of the preceding claims, **characterized in that** during injection molding of the housing (8), the connecting element (16) is partially coated with the material from which the housing (8) is made by means of injection molding.

9. The method according to claim 8, **characterized in that** the base (14) is welded to the connecting element (16) in the first bonding region (21), after which the base (14) is welded to the diffuser (2) in the second bonding region (22).

## Revendications

1. Echangeur de chaleur de gaz d'échappement, en particulier pour un véhicule automobile, comprenant:
au moins un diffuseur (2) servant à fournir et/ou à évacuer un flux de gaz d'échappement;
une zone d'échangeur (4) comprenant des tubes d'échangeur s'étendant dans la direction axiale, tubes d'échangeur qui sont assemblés, au niveau d'une extrémité, avec un plateau (14);
un carter (8) traversé par un moyen de refroidissement, carter qui est constitué d'un matériau non résistant à des températures élevées, en particulier constitué de matière plastique ou d'aluminium,
où la zone d'échangeur (4) est placée dans le carter, où un élément d'assemblage (16) est emboîté partiellement dans le carter (8), pour fixer l'élément d'assemblage (16) sur le carter (8), où l'élément d'assemblage (16) est assemblé avec le plateau (14), par continuité de matière, dans une première zone de continuité de matière (21), plateau qui est assemblé avec le diffuseur (2), par continuité de matière, dans une deuxième zone de continuité de matière (22),
**caractérisé en ce que** l'élément d'assemblage (16) est emboîté partiellement, en étant moulé par injection avec le matériau dont est constitué le carter (8).

2. Echangeur de chaleur de gaz d'échappement selon la revendication 1, **caractérisé en ce que** l'élément d'assemblage (16) est réalisé comme un cadre (18).

3. Echangeur de chaleur de gaz d'échappement selon l'une ou l'autre des revendications précédentes, **caractérisé en ce que** l'élément d'assemblage (16) présente une zone de bordure circonférentielle d'assemblage (31) en forme de bride, zone de bordure qui, dans la première zone de continuité de matière (21), est soudée avec une zone de bordure circonférentielle de plateau (32), en forme de bride, zone de bordure qui est configurée sur le plateau (14).

4. Echangeur de chaleur de gaz d'échappement selon l'une quelconque des revendications précédentes, **caractérisé en ce que** le diffuseur (2) présente une zone de bordure de diffuseur (35) qui est soudée avec le plateau (14), dans la deuxième zone de continuité de matière (22).

5. Echangeur de chaleur de gaz d'échappement selon l'une quelconque des revendications précédentes, **caractérisé en ce que** les deux zones de continuité de matière (21, 22) sont disposées dans des plans différents du plateau (14).

6. Echangeur de chaleur de gaz d'échappement selon l'une quelconque des revendications précédentes, **caractérisé en ce que** le carter (8) est constitué de matière plastique ou d'aluminium, l'élément d'assemblage (16) étant constitué d'acier spécial.

7. Echangeur de chaleur de gaz d'échappement selon l'une quelconque des revendications précédentes, **caractérisé en ce que** le diffuseur (2) est en métal, en particulier constitué d'une tôle métallique ou d'un matériau provenant d'un métal coulé.

8. Procédé de fabrication d'un échangeur de chaleur de gaz d'échappement (1) selon l'une quelconque des revendications précédentes, **caractérisé en ce que** l'élément d'assemblage (16), lors du moulage par injection du carter (8), est emboîté partiellement, en étant moulé par injection avec le matériau dont est constitué le carter (8) réalisé par moulage par injection.

9. Procédé selon la revendication 8, **caractérisé en ce que** le plateau (14) est soudé avec l'élément d'assemblage (16), dans la première zone de continuité de matière (21), à la suite de quoi le plateau (14) est soudé avec le diffuseur (2), dans la deuxième zone de continuité de matière (22).
